# EUROPÄISCHE PATENTANMELDUNG

(11) **EP 4 726 200 A1**
(43) Veröffentlichungstag der Anmeldung: **15.04.2026**
(21) Anmeldenummer: 25203309.7
(22) Anmeldetag: 19.09.2025
(51) Int. Cl.: F02M 37/34, B01D 27/08, B01D 29/11, F02M 37/42

(54) **KRAFTSTOFFFILTER**

(30) Priorität: 11.10.2024 DE 102024129392
(71) Anmelder: Mahle International GmbH, 70376 Stuttgart (DE)
(72) Erfinder: Ostafe, Alexandru Bogdan, 300062 Timisoara (RO); Häußermann, Uli, 70734 Fellbach (DE); Jadaneantu, Sorin, 307272 Timis (RO)

(57) **Zusammenfassung**

Die Erfindung betrifft einen Kraftstofffilter (1) zum Filtern eines Kraftstoffs für ein Kraftfahrzeug. Der Kraftstofffilter (1) umfasst ein Gehäuse (2) und einen Auslassstutzen (4). Zudem umfasst der Kraftstofffilter (1) ein Filterelement (3) mit einem Filterkörper (7) und zwei Endscheiben (8a, 8b). Das Filterelement (3) umfasst ferner ein Dichtungsrohr (10), das einseitig an einer der Endscheiben (8a) und andersseitig an dem Auslassstutzen (4) dichtend anliegt.

## Beschreibung

Die Erfindung betrifft einen Kraftstofffilter zum Filtern eines Kraftstoffs für ein Kraftfahrzeug mit einem Gehäuse und einem Filterelement nach dem Oberbegriff des Anspruchs 1.

Ein Kraftstofffilter weist üblicherweise ein Gehäuse und ein in dem Gehäuse angeordnetes Filterelement auf. Das Filterelement umfasst dabei einen Filterkörper aus einem Filtermaterial und teilt das Gehäuse in eine Reinseite und eine Rohseite auf. Der zu filternde Kraftstoff strömt dann in dem Gehäuse von der Rohrseite auf die Reinseite über das Filtermaterial des Filterkörpers und wird gefiltert. Das Filterelement ist auswechselbar ausgebildet. Nachteiligerweise kann beim Herausnehmen des Filterelements der auf der Rohseite befindliche und ungefilterte Kraftstoff auf die Reinseite gelangen. Dadurch kann der bereits gefilterte Kraftstoff mit dem nicht gefilterten Kraftstoff verschmutzt werden.

Die Aufgabe der Erfindung ist es daher, für einen Kraftstofffilter der gattungsgemäßen Art eine verbesserte oder zumindest alternative Ausführungsform anzugeben, bei der die beschriebenen Nachteile überwunden werden.

Diese Aufgabe wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem Grundgedanken, eine Dichtungsstelle zwischen der Rohseite und der Reinseite derart zu verlagern, dass der Kraftstoff beim Herausnehmen des Filterelements auf die Reinseite nicht gelangen kann.

Der erfindungsgemäße Kraftstofffilter ist zum Filtern eines Kraftstoffs für ein Kraftfahrzeug ausgelegt. Der Kraftstofffilter umfasst dabei ein Gehäuse, das bezüglich seiner Längsmittelachse ein erstes Längsende und ein zweites Längsende aufweist. Ferner umfasst der Kraftstofffilter ein Filterelement, das eine erste Endscheibe, eine zweite Endscheibe und einen hohlzylindrischen Filterkörper aufweist. Der Filterkörper ist dabei zwischen den axial ausgerichteten Endscheiben angeordnet. Das Filterelement ist in dem Gehäuse koaxial angeordnet, wobei die erste Endscheibe des Filterelements dem ersten Längsende des Gehäuses und die zweite Endscheibe des Filterelements dem zweiten Längsende des Gehäuses zugewandt angeordnet sind. Ferner umfasst der Kraftstofffilter einen hohlzylindrischen Auslassstutzen, der in dem Gehäuse und in dem Filterelement koaxial angeordnet ist. Der Auslassstutzen ist an dem ersten Längsende des Gehäuses mit einem Auslass des Gehäuses fluidisch verbunden und weist von dem ersten Längsende des Gehäuses abgewandt eine Einlassöffnung auf. Das Filterelement umfasst erfindungsgemäß ein Dichtungsrohr, das innerhalb des Filterkörpers und zu dem Filterkörper koaxial angeordnet ist. Einseitig ist das Dichtungsrohr mit der ersten Endscheibe fluiddicht verbunden und andersseitig liegt das Dichtungsrohr von der ersten Endscheibe axial beabstandet an dem Auslassstutzen fluiddicht an.

Bei einem herkömmlichen Kraftstofffilter liegt das Filterelement mit der ersten Endscheibe an dem Auslassstutzen fluiddicht an. Dadurch sind die Reinseite und die Rohrseite in dem herkömmlichen Kraftstofffilter an einer zwischen der ersten Endscheibe des Filterelements und dem Auslassstutzen ausgebildeten Dichtungsstelle fluidisch voneinander getrennt. Wird in dem herkömmlichen Kraftstofffilter das Filterelement beim Wechseln herausgenommen, so setzt sich der nicht gefilterte Kraftstoff zu dem ersten Längsende ab und kann den Auslassstutzen oberhalb der Dichtungsstelle umströmen. Nach dem Einsetzten des neuen Filterelements liegt dann der Bereich oberhalb der Dichtungsstelle auf der Reinseite und der nicht gefilterte Kraftstoff gelangt auf die Reinseite. In dem erfindungsgemäßen Kraftstofffilter liegt das Filterelement mit dem Dichtungsrohr an dem Auslassstutzen dichtend an. Dadurch sind die Reinseite und die Rohrseite an einer zwischen dem Dichtungsrohr und dem Auslassstutzen ausgebildeten Dichtungsstelle fluidisch voneinander getrennt. Im Unterscheid zu dem herkömmlichen Kraftstofffilter ist hier die Dichtungsstelle von der ersten Endscheibe bzw. von der herkömmlichen Dichtungsstelle axial beabstandet angeordnet. Wird in dem erfindungsgemäßen Kraftstofffilter das Filterelement beim Wechseln herausgenommen, so setzt sich der nicht gefilterte Kraftstoff zu dem ersten Längsende ab. Dabei kann der nicht gefilterte Kraftstoff den Auslassstutzen nur in einem Bereich unterhalb der Dichtungsstelle umströmen. Nach dem Einsetzten des neuen Filterelements bleibt jedoch dieser Bereich auf der Rohseite und der nicht gefilterte Kraftstoff kann auf die Reinseite nicht gelangen. Dadurch kann der gefilterte Kraftstoff beim Wechseln des Filterelements mit dem nicht gefilterten Kraftstoff nicht verschmutzt werden.

Das Filterelement kann insbesondere den Filterkörper aus einem filternden Material - wie beispielweise Vlies und/oder Papier - aufweisen. Der Filterkörper kann axial beidseitig mit den Endscheiben stoffschlüssig verbunden - beispielweise verklebt - sein. Das Dichtungsrohr und/oder die erste Endscheibe und/oder die zweite Endscheibe und/oder der Auslassstutzen und/oder das Gehäuse können aus Kunststoff ausgebildet sein. Das Dichtungsrohr kann mit der ersten Endscheibe stoffschlüssig verbunden, vorzugsweise verschweißt, sein. Eine Rohseite des Kraftstofffilters kann sich um den Filterkörper umlaufend sowie zwischen der ersten Endscheibe und dem ersten Längsende des Gehäuses sowie zwischen dem Auslassstutzen und dem Dichtungsrohr von der ersten Endscheibe bis zu einer zwischen dem Dichtungsrohr und dem Auslassstutzen ausgebildeten Dichtungsstelle erstrecken. Eine Reinseite des Kraftstofffilters kann sich innerhalb des Filterkörpers sowie zwischen dem Filterkörper und dem Dichtungsrohr erstrecken.

Das Dichtungsrohr kann an dem Auslassstutzen zwischen der Einlassöffnung des Auslassstutzens und der ersten Endscheibe und/oder dem ersten Längsende des Gehäuses fluiddicht anliegen. Mit anderen Worten kann der Auslassstutzen von dem ersten Längsende des Gehäuses abgewandt aus dem Dichtungsrohr des Filterelements axial herausragen. Dabei kann die Einlassöffnung des Auslassstutzens außerhalb des Dichtungsrohrs des Filterelements angeordnet sein. Dadurch kann die Einlassöffnung innerhalb eines Innenraums des Filterelements angeordnet sein und der gefilterte Kraftstoff aus dem Innenraum über die Einlassöffnung in den Auslassstutzen und weiter zu dem Auslass des Gehäuses strömen.

Das Dichtungsrohr kann dem Auslassstutzen zugewandt wenigstens eine die Längsmittelachse umlaufende Rippe aufweisen und die Rippe kann dann an dem Auslassstutzen dichtend anliegen. Alternativ oder zusätzlich kann der Auslassstutzen dem Dichtungsrohr zugewandt wenigstens eine die Längsmittelachse umlaufende Rippe aufweisen und die Rippe kann dann an dem Dichtungsrohr dichtend anliegen. Durch die jeweilige Rippe kann insbesondere eine dichtende Verbindung zwischen dem Dichtungsrohr und dem Auslassstutzen verbessert werden. Dabei ist es denkbar, dass das Dichtungsrohr genau zwei zueinander axial beabstandete Rippen und der Auslassstutzen genau eine Rippe aufweist. Die Rippe des Auslassstutzens kann dann axial zwischen den beiden Rippen des Dichtungsrohrs angeordnet sein.

Eine axiale Höhe des Auslassstutzens kann mehr als 10%, bevorzugt mehr als 30%, besonders bevorzugt mehr als 50%, einer axialen Höhe des Gehäuses betragen. Der Auslassstutzen kann sich von dem ersten Längsende des Gehäuses zu dem zweiten Längsende des Gehäuses insbesondere über eine axiale Mitte des Gehäuses erstrecken. Alternativ oder zusätzlich kann eine axiale Höhe des Dichtungsrohrs mehr als 10%, bevorzugt mehr als 30%, besonders bevorzugt mehr als 50%, einer axialen Höhe des Filterkörpers betragen. Insbesondere kann das Dichtungsrohr sich von der ersten Endscheibe zu der zweiten Endscheibe des Filterelements zumindest bis zur axialen Mitte des Filterkörpers erstrecken. Dadurch kann eine Dichtungsstelle zwischen dem Dichtungsrohr und dem Auslassstutzen ausreichend beabstandet von dem ersten Längsende des Gehäuses angeordnet sein und dadurch ein Verschmutzen des gefilterten Kraftstoffs mit dem nicht gefilterten Kraftstoff beim Wechseln des Filterelements sicher verhindert werden.

Das Gehäuse kann an dem ersten Längsende ein erstes Gehäuseteil und an dem zweiten Längsende ein zweites Gehäuseteil aufweisen. Das erste Gehäuseteil und das zweite Gehäuseteil können dabei an einer die Längsmittelachse umlaufenden Verbindungsstelle des Gehäuses miteinander lösbar verbunden, beispielweise verschraubt - sein. Das Dichtungsrohr kann sich dann von der ersten Endscheibe zu der zweiten Endscheibe des Filterelements axial über die Verbindungsstelle erstrecken. Wird also die Verbindungsstelle gelöst und das Filterelement zum Wechseln herausgenommen, so kann der nicht gefilterte Kraftstoff das erste Gehäuseteil nur bis zu einem Rand des ersten Gehäuseteils bzw. bis zu der gelösten Verbindungsstelle ausfüllen. Da das Dichtungsrohr sich axial über die Verbindungsstelle erstreckt, kann der nicht gefilterte Kraftstoff eine Dichtungsstelle zwischen dem Dichtungsrohr und dem Auslassstutzen nicht umströmen. Dadurch kann ein Verschmutzen des gefilterten Kraftstoffs mit dem nicht gefilterten Kraftstoff beim Wechseln des Filterelements sicher verhindert werden.

Das Filterelement kann eine hohlzylindrische radial durchströmbare Tragzarge aufweisen. Die Tragzarge kann innerhalb des Filterkörpers zu dem Filterkörper koaxial angeordnet sein. Die Tragzarge kann dabei zwischen dem Filterkörper und dem Dichtungsrohr so angeordnet sein, dass der Filterkörper durch die Tragzarge und die Tragzarge durch das Dichtungsrohr radial nach innen abstützt sind. Der Filterkörper kann an der Tragzarge anliegen und mit der Tragzarge stoffschlüssig verbunden - beispielweise verklebt - sein. Ein Spalt zwischen der Tragzarge und dem Dichtungsrohr kann beispielweise 0,5 mm betragen. Die Tragzarge kann beispielweise aus Kunststoff ausgebildet sein. Die Tragzarge kann mit den Endscheiben des Filterelements verbunden - beispielweise stoffschlüssig verbunden - sein. Dadurch können die Steifigkeit des Filterelements erhöht und das Risiko eines Zusammenbruchs des Filterelements reduziert werden.

Zwischen der Tragzarge und dem Dichtungsrohr und/oder zwischen der Tragzarge und dem Filterkörper können axial durchströmbare Kanäle zum Durchströmen des Kraftstoffs ausgebildet sein. Durch die Kanäle kann der Kraftstoff, der axial gegenüber dem Dichtungsrohr durch den Filterkörper hindurchströmt axial zu der Einlassöffnung des Auslassstutzens geleitet werden.

Im Zusammenhang mit der vorliegenden Erfindung sind die Begriffe "axial" und "radial" und "koaxial" und "umlaufend" stets auf die Längsmittelachse des Gehäuses bezogen. In dem Kraftstofffilter können das Gehäuse und/oder der Filterkörper und/oder die Tragzarge und/oder das Dichtungsrohr und/oder der Auslassstutzen koaxial zueinander ausgerichtet sein. Die Formulierung "innerhalb eines hohlzylindrischen Elements" ist mit der Formulierung "in einem innerhalb des hohlzylindrischen Elements ausgebildeten Hohlraums" gleichbedeutend.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine Schnittansicht eines erfindungsgemäßen Kraftstofffilters;
- Fig. 2: eine Schnittansicht des erfindungsgemäßen Kraftstofffilters beim Wechseln eines Filterelements;
- Fig. 3: eine Schnittansicht des Filterelements des erfindungsgemäßen Kraftstofffilters;
- Fig. 4: eine Schnittansicht eines Dichtungsrohrs des Filterelements des erfindungsgemäßen Kraftstofffilters;
- Fig. 5: eine Dichtungsstelle des erfindungsgemäßen Kraftstofffilters.

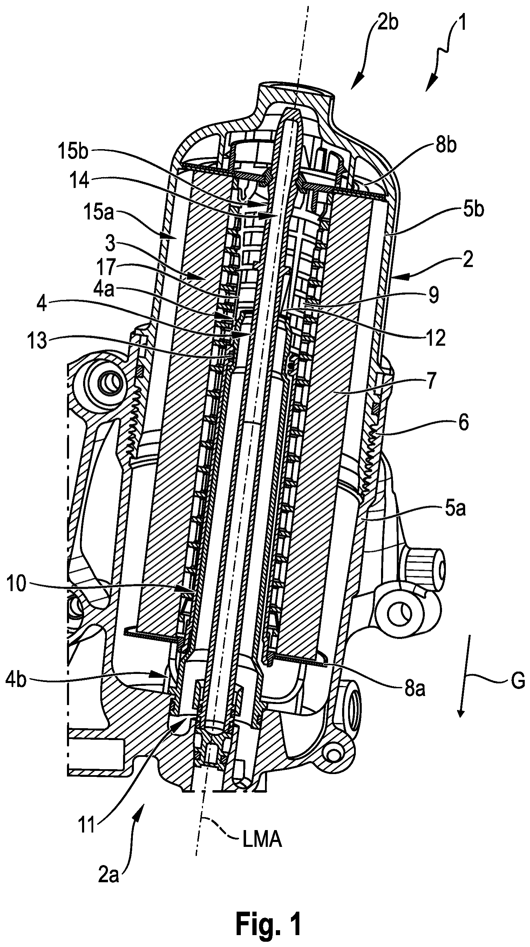

Fig. 1 zeigt eine Schnittansicht eines erfindungsgemäßen Kraftstofffilters 1 zum Filtern eines Kraftstoffs für ein Kraftfahrzeug. Der Kraftstofffilter 1 umfasst dabei ein Gehäuse 2, ein hohlzylindrisches Filterelement 3 und einen hohlzylindrischen Auslassstutzen 4. In Fig. 1 ist der Kraftstofffilter 1 bezüglich der Erdanziehungskraft G betriebsgerecht ausgerichtet.

Das Gehäuse 2 weist dabei ein erstens Längsende 2a und ein zweites Längsende 2b, die bezüglich einer Längsmittelachse LMA des Gehäuses 2 axial zueinander beabstandet sind. Das Gehäuse 2 umfasst zudem ein erstes Gehäuseteil 5a mit dem ersten Längsende 2a und ein zweites Gehäuseteil 5b mit dem zweiten Längsende 2b, die an einer umlaufenden Verbindungsstelle 6 miteinander lösbar verbunden - hier verschraubt - sind.

Das Filterelement 3 umfasst einen hohlzylindrischen Filterkörper 7, eine erste Endscheibe 8a und eine zweite Endscheibe 8b, eine hohlzylindrische Tragzarge 9 und ein Dichtungsrohr 10. Das Dichtungsrohr 10 ist innerhalb der Tragzarge 9 und die Tragzarge 9 ist innerhalb des Filterkörpers 8 angeordnet. Dabei sind der Filterkörper 7, die Tragzarge 9 und das Dichtungsrohr 10 koaxial zueinander und axial zwischen den senkrecht zur Längsmittelachse LMA ausgerichteten Endscheiben 8a und 8b angeordnet. Der Filterkörper 7 und die Tragzarge 9 erstrecken sich dabei über eine gesamte axiale Höhe des Filterkörpers 7 und sind mit den Endscheiben 8a und 8b verbunden. Dabei sind der Filterkörper 7 radial nach innen an der Tragzarge 9 und die Tragzarge 9 radial nach innen an dem Dichtungsrohr 10 abgestützt. Das Dichtungsrohr 10 ist mit der ersten Endscheibe 8a verbunden - beispielweise verschweißt - und erstreckt sich etwa über eine axiale Mitte des Filterkörpers 7. Das Filterelement 3 ist in dem Gehäuse 2 koaxial angeordnet, sodass der Filterkörper 7, die Tragzarge 9 und das Dichtungsrohr 10 koaxial zu dem Gehäuse 2 ausgerichtet sind.

Der Auslassstutzen 4 ist bereichsweise innerhalb des Dichtungsrohrs 10 des Filterelements 3 angeordnet und koaxial zu dem Gehäuse 2 und zu dem Filterelement 3 ausgerichtet. Der Auslassstutzen 4 ist an seinem ersten axialen Ende 4a mit einem an dem ersten Längsende 2a ausgebildeten Auslass 11 des Gehäuses 2 fluidisch verbunden und ragt an seinem zweiten axialen Ende 4b aus dem Dichtungsrohr 10 heraus. An dem zweiten Ende 4b weist der Auslassstuten 4 eine Einlassöffnung 12 auf, die aus einem Innenraum 17 des Filterelements 3 in den Auslassstutzen 4 führt. Das Dichtungsrohr 10 liegt dabei außenseitig an dem Auslassstutzen 4 an, sodass eine umlaufende Dichtungsstelle 13 zwischen dem Dichtungsrohr 10 bzw. dem Filterelement 3 und dem Auslassstutzen 4 ausgebildet ist. Innerhalb des Auslassstutzens 4 ist zudem ein Entlüftungsrohr 14 des Kraftstofffilters 1 koaxial angeordnet. Das Entlüftungsrohr 14 verbindet dabei den Auslass 11 des Gehäuses 2 mit der Umgebung an dem zweiten Längsende 2b des Gehäuses 2.

Der Kraftstofffilter 1 ist zum Filtern des Kraftstoffs ausgelegt. Dabei strömt der Kraftstoff auf eine Rohseite 15a des Gehäuses 2 und durch den Filterkörper 7 des Filterelements 3 hindurch auf eine Reinseite 15b des Gehäuses 2. Die Rohseite 15a des Gehäuses 2 umfasst hier einen das Filterelement 3 außenseitig umlaufenden Bereich und einen zwischen dem ersten Längsende 2a des Gehäuses 2 und der Endscheibe 8a des Filterelements 3 angeordneten Bereich. Ferner umfasst hier die Rohseite 15a einen Bereich, der zwischen dem Dichtungsrohr 10 und dem Auslassstutzen 4 angeordnet ist und sich axial von der ersten Endscheibe 8a bis zur Dichtungsstelle 13 erstreckt.

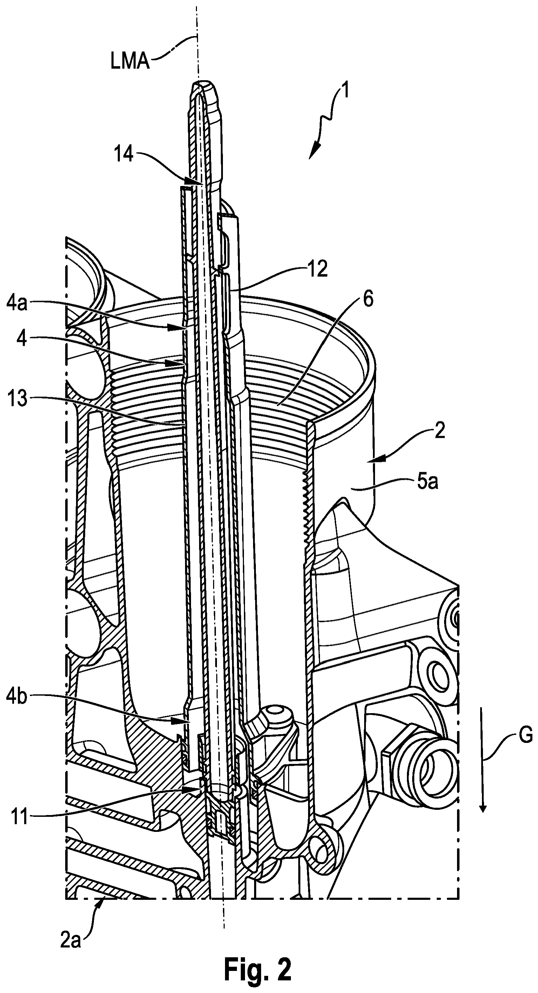

Fig. 2 zeigt eine Schnittansicht des erfindungsgemäßen Kraftstofffilters 1 beim Wechseln des Filterelements 3. Hier sind das zweite Gehäuseteil 5b von dem ersten Gehäuseteil 5a an der Verbindungsstelle 6 gelöst und das Filterelement 3 aus dem Gehäuse 2 herausgenommen. In Fig. 2 ist der Kraftstofffilter 1 bezüglich der Erdanziehungskraft G betriebsgerecht ausgerichtet.

Wird in dem Kraftstofffilter 1 das Filterelement 3 beim Wechseln herausgenommen - wie in Fig. 2 gezeigt ist, - so setzt sich der nicht gefilterte Kraftstoff in dem ersten Gehäuseteil 5a nach unten ab. Die Dichtungsstelle 13 ist dabei derart ausgebildet, dass der nicht gefilterte Kraftstoff den Auslassstutzen 4 nur im Bereich unterhalb der Dichtungsstelle 13 umströmen kann. Wird das neue Filterelement 3 in das Gehäuse 2 eingesetzt - wie in Fig. 1 gezeigt ist, - so liegt der von dem nicht gefilterten Kraftstoff umströmte Bereich des Auslassstutzens 4 auf der Rohseite 15b. Dadurch kann der nicht gefilterte Kraftstoff auch beim Wechseln des Filterelements 3 nicht auf die Reinseite 15b gelangen und dadurch kann der gefilterte Kraftstoff vor einer Verschmutzung geschützt werden.

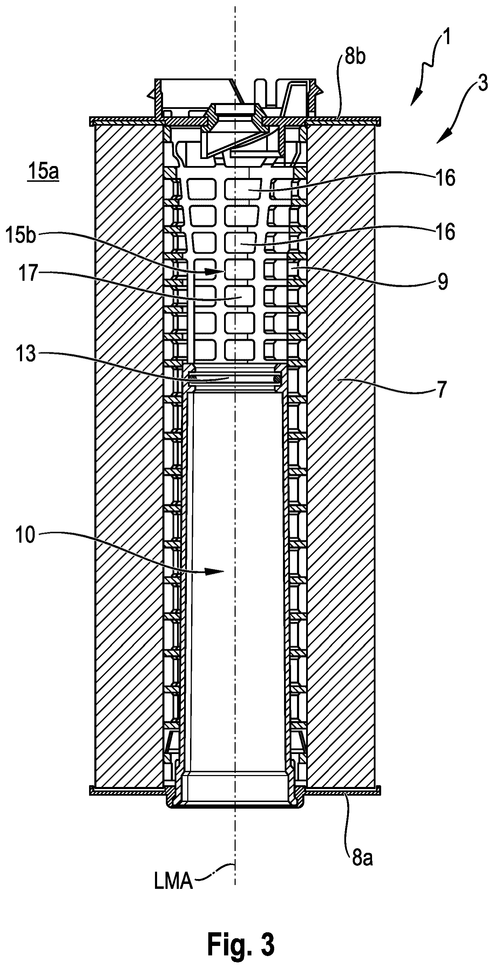

Fig. 3 eine Schnittansicht des Filterelements 3 des erfindungsgemäßen Kraftstofffilters 1. Wie hier besonders gut erkennbar ist, erstreckt sich das Dichtungsrohr 10 nicht über die gesamte axiale Höhe des Filterkörpers 7. Zudem ist erkennbar, dass die Tragzarge 9 mehrere radiale Öffnungen 16 umfasst. Durch die Öffnungen 16 kann der in dem Filterkörper 7 gefilterte Kraftstoff in den Innenraum 17 des Filterelements 3 gelangen und über die Einlassöffnung 12 des Auslassstutzens 4 in den Auslassstutzen 4 und zu dem Auslass 11 des Gehäuses 2 strömen.

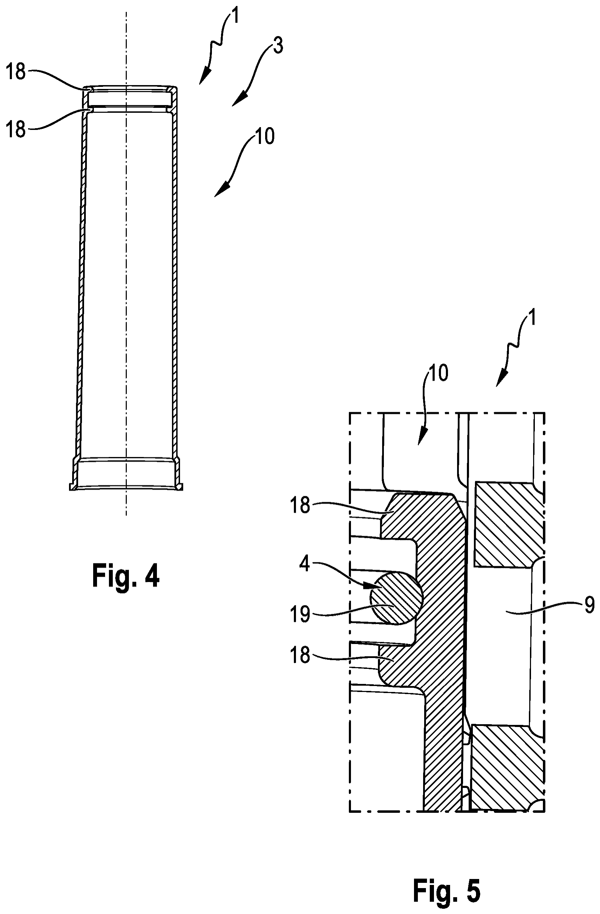

Fig. 4 zeigt eine Schnittansicht des Dichtungsrohrs 10 des Filterelements 3 des erfindungsgemäßen Kraftstofffilters 1. Wie in Fig. 4 besonders gut erkennbar ist, weist das Dichtungsrohr 10 zwei umlaufende und axial zueinander beabstandete Rippen 18 auf. Die Rippen 18 sind dabei dem Auslassstutzen 4 zugewandt an dem Dichtungsrohr 10 ausgebildet.

Fig. 5 zeigt die Dichtungsstelle 13 in dem erfindungsgemäßen Kraftstofffilter 1. Wie hier erkennbar ist, umfasst der Auslassstutzen 4 eine umlaufende Rippe 19, die axial zwischen den Rippen 18 des Dichtungsrohrs 10 angeordnet ist. Durch die Rippen 18 und 19 ist eine besonders sichere Abdichtung der Reinseite 15b erreichbar.

## Patentansprüche

1. Kraftstofffilter (1) zum Filtern eines Kraftstoffs für ein Kraftfahrzeug,
- wobei der Kraftstofffilter (1) ein Gehäuse (2) und ein Filterelement (3) aufweist,
- wobei das Gehäuse (2) bezüglich seiner Längsmittelachse (LMA) ein erstes Längsende (2a) und ein zweites Längsende (2b) aufweist,
- wobei das Filterelement (3) eine erste Endscheibe (8a), eine zweite Endscheibe (8b) und einen hohlzylindrischen in Axialrichtung zwischen den Endscheiben (8a, 8b) angeordneten Filterkörper (7) aufweist,
- wobei das Filterelement (3) in dem Gehäuse (2) koaxial und mit der ersten Endscheibe (8a) dem ersten Längsende (2a) des Gehäuses (2) zugewandt und mit der zweiten Endscheibe (8b) dem zweiten Längsende (2b) des Gehäuses (2) zugewandt angeordnet ist,
- wobei der Kraftstofffilter (1) einen hohlzylindrischen Auslassstutzen (4) aufweist und der Auslassstutzen (4) in dem Gehäuse (2) und in dem Filterelement (3) koaxial angeordnet ist,
- wobei der Auslassstutzen (4) an dem ersten Längsende (2a) des Gehäuses (2) mit einem Auslass (11) des Gehäuses (2) fluidisch verbunden ist und von dem ersten Längsende (2a) des Gehäuses (2) abgewandt eine Einlassöffnung (12) aufweist,
**dadurch gekennzeichnet,**
- **dass** das Filterelement (3) ein Dichtungsrohr (10) aufweist und das Dichtungsrohr (10) innerhalb des Filterkörpers (7) und zu dem Filterkörper (7) koaxial angeordnet ist, und
- **dass** das Dichtungsrohr (10) einseitig mit der ersten Endscheibe (8a) fluiddicht verbunden ist und andersseitig von der ersten Endscheibe (8a) axial beabstandet an dem Auslassstutzen (4) fluiddicht anliegt.

2. Kraftstofffilter (1) nach Anspruch 1,
**dadurch gekennzeichnet,**
- **dass** das Dichtungsrohr (10) an dem Auslassstutzen (4) zwischen der Einlassöffnung (12) des Auslassstutzens (4) und der ersten Endscheibe (8a) und/oder dem ersten Längsende (2a) des Gehäuses (2) fluiddicht anliegt, und/oder
- **dass** der Auslassstutzen (4) von dem ersten Längsende (2a) des Gehäuses (2) abgewandt aus dem Dichtungsrohr (10) des Filterelements (3) axial herausragt und die Einlassöffnung (12) des Auslassstutzens (4) außerhalb des Dichtungsrohrs (10) des Filterelements (3) angeordnet ist.

3. Kraftstofffilter (1) nach Anspruch 1 oder 2,
**dadurch gekennzeichnet,**
- **dass** das Dichtungsrohr (10) dem Auslassstutzen (4) zugewandt wenigstens eine die Längsmittelachse (LMA) umlaufende Rippe (18) aufweist und die Rippe (18) an dem Auslassstutzen (4) dichtend anliegt, und/oder
- **dass** der Auslassstutzen (4) dem Dichtungsrohr (10) zugewandt wenigstens eine die Längsmittelachse (LMA) umlaufende Rippe (19) aufweist und die Rippe (19) an dem Dichtungsrohr (10) dichtend anliegt.

4. Kraftstofffilter (1) nach Anspruch 3,
**dadurch gekennzeichnet,**
- **dass** das Dichtungsrohr (10) genau zwei zueinander axial beabstandete Rippen (18) und der Auslassstutzen (4) genau eine Rippe (19) aufweist, und
- **dass** die Rippe (19) des Auslassstutzens (4) axial zwischen den beiden Rippen (18) des Dichtungsrohrs (10) angeordnet ist.

5. Kraftstofffilter (1) nach einem der vorangehenden Ansprüche,
**dadurch gekennzeichnet,**
- **dass** eine axiale Höhe des Auslassstutzens (4) mehr als 10%, bevorzugt mehr als 30%, besonders bevorzugt mehr als 50%, einer axialen Höhe des Gehäuses (2) beträgt, und/oder
- **dass** eine axiale Höhe des Dichtungsrohrs (10) mehr als 10%, bevorzugt mehr als 30%, besonders bevorzugt mehr als 50%, einer axialen Höhe des Filterkörpers (7) beträgt.

6. Kraftstofffilter (1) nach einem der vorangehenden Ansprüche,
**dadurch gekennzeichnet,**
- **dass** das Gehäuse (2) an dem ersten Längsende (2a) ein erstes Gehäuseteil (5a) und an dem zweiten Längsende (2b) ein zweites Gehäuseteil (5b) aufweist,
- **dass** das erste Gehäuseteil (5a) und das zweite Gehäuseteil (5b) an einer die Längsmittelachse (LMA) umlaufenden Verbindungsstelle (6) des Gehäuses (2) miteinander lösbar verbunden sind, und
- **dass** das Dichtungsrohr (10) sich von der ersten Endscheibe (8a) zu der zweiten Endscheibe (8b) des Filterelements (3) axial über die Verbindungsstelle (6) erstreckt.

7. Kraftstofffilter (1) nach einem der vorangehenden Ansprüche,
**dadurch gekennzeichnet,**
- **dass** das Filterelement (3) eine hohlzylindrische radial durchströmbare Tragzarge (9) aufweist und die Tragzarge (9) innerhalb des Filterkörpers (7) und zu dem Filterkörper (7) koaxial angeordnet ist, und
- **dass** die Tragzarge (9) zwischen dem Filterkörper (7) und dem Dichtungsrohr (10) so angeordnet ist, dass der Filterkörper (7) durch die Tragzarge (9) und die Tragzarge (9) durch das Dichtungsrohr (10) radial nach innen abstützt sind.

8. Kraftstofffilter (1) nach Anspruch 7,
**dadurch gekennzeichnet,**
**dass** zwischen der Tragzarge (9) und dem Dichtungsrohr (10) und/oder zwischen der Tragzarge (9) und dem Filterkörper (7) axial durchströmbare Kanäle zum Durchströmen des Kraftstoffs ausgebildet sind.

9. Kraftstofffilter (7) nach einem der vorangehenden Ansprüche,
**dadurch gekennzeichnet,**
**dass** das Dichtungsrohr (10) und/oder die erste Endscheibe (8a) und/oder die zweite Endscheibe (8b) und/oder die Tragzarge (9) und/oder der Auslassstutzen (4) und/oder das Gehäuse (2) aus Kunststoff ausgebildet sind.

10. Kraftstofffilter (1) nach einem der vorangehenden Ansprüche,
**dadurch gekennzeichnet,**
**dass** das Dichtungsrohr (10) mit der ersten Endscheibe (8a) stoffschlüssig verbunden, vorzugsweise verschweißt, ist.
